# EUROPEAN PATENT APPLICATION

(11) **EP 2 515 051 A1**
(43) Date of publication of application: **24.10.2012**
(21) Application number: 09852187.5
(22) Date of filing: 17.12.2009
(51) Int. Cl.: F24J 2/38, G02B 5/08, G05D 3/00

(54) **HELIOSTAT DEVICE**

(71) Applicant: Wang, Chengwei, Beijing 102602 (CN); Wang, Zhiming, Beijing 102602 (CN)
(72) Inventor: Wang, Chengwei, Beijing 102602 (CN); Wang, Zhiming, Beijing 102602 (CN)
(74) Representative: Tetaz, Franck Claude Edouard
(86) International application number: PCT/CN2009/075668
(87) International publication number: WO 2011/072449

(57) **Abstract**

A heliostat device includes: a mirror assembly (1) whose frontal mirrors face to the sun; an elevation angle adjusting mechanism controlled to drive the mirror assembly to rotate around a horizontal axis (12) so as to adjust the elevation angle of the mirror assembly; an azimuth angle adjusting mechanism controlled to drive the mirror assembly to rotate around a vertical axis (13) so as to adjust the azimuth angle of the mirror assembly; a alignment sensor (4) which faces to the mirror assembly and sends out elevation angle controlling signals and azimuth angle controlling signals to control the reflecting direction of the mirror assembly; a post (5) which fixedly stands on the ground and integrally supports the mirror assembly, the elevation angle adjusting mechanism and the azimuth angle adjusting mechanism by supporting the back side of the mirror assembly; and a supporting arm (10), on one end of which is mounted the alignment sensor, and the other end of which is fixed on the post. The supporting arm passes through a gap of the mirror assembly under the center mirror, and thereby the alignment sensor protrudes to the front of the center mirror, such that all of the reflected light from the mirror assembly is controlled to strike the target of the collector during the motion of the sun.

## Description

### Field of the Invention

The present application generally relates to a heliostat device for a tower-solar power plant. More particularly, the present application relates to a heliostat device controlling the reflecting direction by a sensor.

### Background of the Invention

The heliostat is a mirror device for locating the sunlight on a target accurately, and is usually used as a beam-condensing component in a solar illuminating apparatus or a solar thermal power generation system. In a tower-solar thermal power generation system, the sunlight is reflected by a heliostat assembly comprising a plurality of heliostats to a collector mounted on top of a receiving tower, so as to obtain focused solar energy. In order to obtain a desired condensing effect, it is usually desired that the heliostat device has high tracking accuracy.

As shown in Fig. 1, the Chinese patent publication No. CN 100,554,816 disclosed a heliostat device comprising: a mirror assembly and its frame 111, an elevation angle adjusting mechanism, an azimuth angle adjusting mechanism, alignment sensors 14-15, and a control system for controlling the movement of the above-mentioned adjusting mechanisms by the input signals from the alignment sensor. The alignment sensors are supported by the separate supporting pole 112 on the ground between the mirror assembly and the collector, and the central axis of the alignment sensor coincides with the line between the intersecting point (geometrical center) between the transverse axis and the longitudinal axis of the mirror assembly and the central point of the collector. The control system adjusts the attitude of the mirror assembly in accordance with the light intensity difference signals in four directions sensed by the four-quadrant photosensitive member in the alignment sensor, such that the direction of the reflected light from the mirror always coincides with the direction which the alignment sensors directs.

However, in actual application, since it is difficult to ensure the stability of the supporting pole of the alignment sensors due to the influence of various bad outdoor conditions (strong wind, rain, snow and the like), the tracking accuracy of the heliostat device is affected. Furthermore, because the alignment sensors and the mirror assembly are separate from each other, it is inconvenient to adjust the alignment sensors in installation and maintenance.

### Summary of the Invention

Considering the above-mentioned problems, the present invention is disclosed. The present invention provides a heliostat device comprising: a mirror assembly whose frontal mirrors face to the sun; an elevation angle adjusting mechanism controlled to drive the mirror assembly to rotate around a horizontal axis so as to adjust the elevation angle of the mirror assembly; an azimuth angle adjusting mechanism controlled to drive the mirror assembly to rotate around a vertical axis so as to adjust the azimuth angle of the mirror assembly; a alignment sensor which faces to the mirror assembly and sends out elevation angle controlling signals and azimuth angle controlling signals to control the reflecting direction of the mirror assembly; and a post which fixedly stands on the ground and integrally supports the mirror assembly, the elevation angle adjusting mechanism and the azimuth angle adjusting mechanism by supporting the back side of the mirror assembly, wherein a supporting arm, on one end of which is mounted the alignment sensor, and the other end of which is fixed on the post, passes through a gap of the mirror assembly under the center mirror, and thereby the alignment sensor on the one end of the alignment sensor protrudes to the front of the center mirror, such that all of the reflected light from the mirror assembly is controlled to strike the target of the collector during the motion of the sun.

### Description of the Drawings

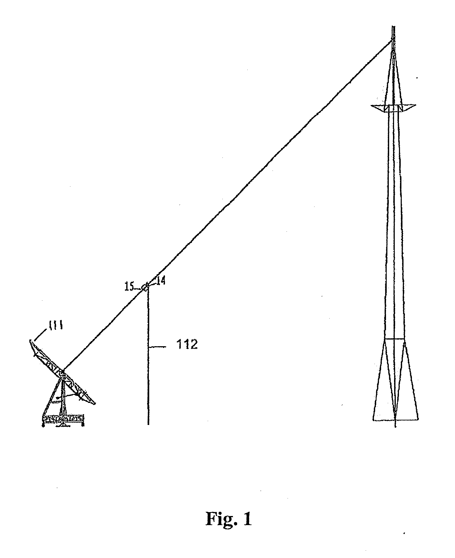

FIG.1 is the structure schematic of the prior heliostat device.

FIG.2 is the schematic of the heliostat device in accordance with the embodiments of the present invention.

FIG.3 is the structure schematic of the heliostat device observed from the front side of the mirror assembly.

FIG.4 is a perspective view showing the structure of the heliostat device without the supporting arm observed from the back side of the mirror assembly.

### Detailed Description of the Invention

The present invention is illustrated further in conjunction with the accompanying drawings. The structures in the accompanying drawings are merely exemplary, and shall not be construed as limiting to the present invention. Moreover, the structure in the drawings is not necessarily in the real scale, and the sizes of some sections are magnified to show the details clearly.

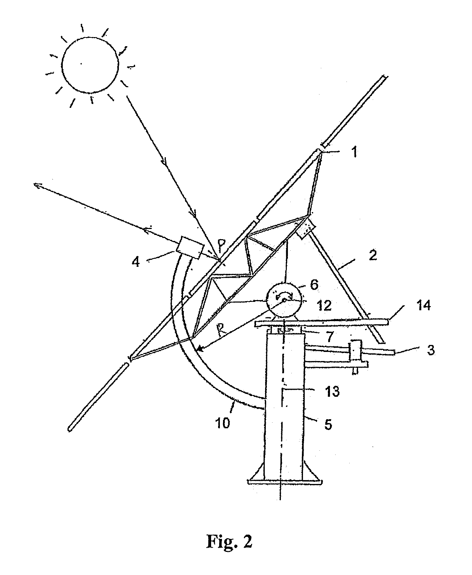

With reference to Fig.2, the present invention provides a heliostat device, comprising: a mirror assembly 1 whose frontal mirrors faces to the sun; an elevation angle adjusting mechanism for driving mirror assembly 1 to rotate around a horizontal axis 12 so as to adjust the elevation angle of the mirror assembly; an azimuth angle adjusting mechanism for driving mirror assembly 1 to rotate around a vertical axis 13 so as to adjust the azimuth angle of the mirror assembly; a alignment sensor 4 which sends out an elevation angle controlling signal and tan azimuth angle controlling signal to control the reflective direction of mirror assembly 1; and a post 5 which stands on the ground and integrally supports the mirror assembly 1, the alignment sensor 4, the elevation angle adjusting mechanism and the azimuth angle adjusting mechanism.

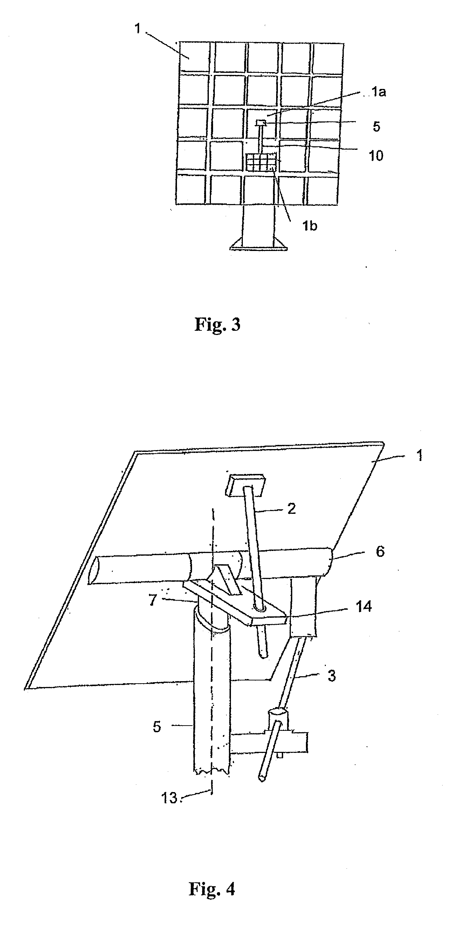

With reference to Fig.4, the elevation angle adjusting mechanism comprises a rotatable supporting shaft 6 and a screw and nut unit 2. The rotatable supporting shaft 6 rotatably supports the mirror assembly 1 so that the mirror assembly 1 can be driven to rotate around the horizontal axis 12 by the screw and nut unit 2 so as to adjust the elevation angle of the mirror assembly 1.

The azimuth angle adjusting mechanism comprises a turnable table 14 which is fixedly connected with the rotatable supporting shaft 6, a pole for the table 7 which is fixedly connected to the turnable table14, and a screw and nut unit 3. The pole for the table 7 is rotatablely disposed on the upper end of the post 5. Therefore, when the screw and nut unit 3 is driven to push the rotatable supporting shaft 6, the pole for the table 7 carrying the turnable table14, the rotatable supporting shaft 6 and the whole mirror assembly 1 rotates around the vertical axis 13 to realize the object of adjusting the orientation of the mirror assembly facing the sun.

Herein, the elevation angle adjusting mechanism, the azimuth angle adjusting mechanism and the vertical post 5 are all disposed on the side of the mirror assembly 1 opposite to the sun (the back side of the mirror assembly).

With reference to Fig.2-3, in the present invention, the supporting arm 10 passes through the position under the center mirror 1a where the original mirror 1b was ever located (the mirror 1b has been removed), and one end of the supporting arm 10 is fixed on the post 5, while the other end extends to the front of the center mirror 1a from the back side of the mirror assembly. The alignment sensor 4 is mounted on the end of the supporting arm 10 that extends to the front of the center mirror 1a such that the reflected light from the position of point P of the center mirror 1a enters the lens of the alignment sensor 4 and is transmitted from the sensor 4 toward the target of the collector to cause the direction of the reflected light at the position of point P to be controlled.

Particularly, in the operation, when the reflected light from the intersecting position (geometrical center) of the transverse axis and the longitudinal axis of the mirror assembly is controlled not to deviate from the alignment sensor 4, the light reflecting direction of the mirror assembly controlled by the alignment sensor 4 is directed to the fixed direction of the concentrating target.

Specially, the portion of the supporting arm 10 of the alignment sensor 4 within the movement range of the mirror assembly has a circular arc shape with the axis of the rotatable supporting shaft 6 as its center and the radius of R. In this way, the mirror assembly 1 can be prevented from colliding with the supporting arm 10 when the mirror assembly is rotated.

Besides, as to the position where the mirror 1b was ever located, not only a certain area of a gap can be provided to allow the alignment sensor 4 to pass through, but also a photovoltaic cell coplanar with the mirror assembly can be mounted in the gap to supply electric energy for the operation of the whole system for long.

The heliostat device in accordance with the present invention has the following advantages: the alignment sensor of the present invention is not disposed separately, but is close to the mirror assembly and fixed to the post which supports the mirror assembly 1, so the reliability for supporting the sensor is improved greatly and it is also convenient to operate in installation or adjustment. Furthermore, due to the removing of a separate supporting pole for the sensor, it is not necessary to take account of the problems, such as the supporting structure of the sensor, the influence of the bad outdoor conditions, etc., so the cost of the production and the maintenance is effectively reduced and a greater economic benefit can be obtained.

The above-mentioned embodiments are merely exemplary, and some changes can be made according to the actual conditions. For example, the arrangement of the supporting arm for supporting the alignment sensor can be modified on the condition that none of the structure for rotation of the whole heliostat device and the attitude of the alignment sensor is changed. In addition, the mirrors in the mirror assembly may be arranged in various numbers such as 5×7, 7×7 9×9, etc., and the size of each mirror is for example 600×600 mm² but is not limited to 600×600 mm².

Beside the above-mentioned embodiments, the present invention has other various embodiments. All equivalent or similar combined changes made on the basis of the teachings of this invention by those skilled in the art shall be within the scope of this patent.

## Claims

1. A heliostat device comprising:
a mirror assembly whose frontal mirrors face to the sun;
an elevation angle adjusting mechanism controlled to drive the mirror assembly to rotate around a horizontal axis so as to adjust the elevation angle of the mirror assembly;
an azimuth angle adjusting mechanism controlled to drive the mirror assembly to rotate around a vertical axis so as to adjust the azimuth angle of the mirror assembly;
a alignment sensor which faces to the mirror assembly and sends out elevation angle controlling signals and azimuth angle controlling signals to control the reflecting direction of the mirror assembly; and
a post which fixedly stands on the ground and integrally supports the mirror assembly, the elevation angle adjusting mechanism and the azimuth angle adjusting mechanism by supporting the back side of the mirror assembly,
wherein a supporting arm, on one end of which is mounted the alignment sensor, and the other end of which is fixed on the post, passes through a gap of the mirror assembly under the center mirror, and thereby the alignment sensor on the one end of the alignment sensor protrudes to the front of the center mirror, such that all of the reflected light from the mirror assembly is controlled to strike the target of the collector during the motion of the sun.

2. A heliostat device as described in claim 1, wherein the elevation angle adjusting mechanism comprises a rotatable supporting shaft, which rotatablely supports the mirror assembly, and a screw and nut unit such that the mirror assembly can be driven to rotate around the horizontal axis by the screw and nut unit so as to adjust the elevation angle.

3. A heliostat device as described in claim 1, wherein the azimuth angle adjusting mechanism comprises a turnable table being fixedly connected with the rotatable supporting shaft which rotatably supports the mirror assembly, a pole for the table which is fixedly connected to the table and rotatably disposed on the upper end of the post, and a screw and nut unit, such that when the screw and nut unit is driven to push the rotatable supporting shaft, the pole for the table carrying the table, the rotatable support shaft and the whole mirror assembly is rotated around the vertical axis to adjust the orientation of the mirror assembly facing the sun.

4. A heliostat device as described in claim 2, wherein the portion of the supporting arm of the alignment sensor in the movement range of the mirror assembly has a circular arc shape which has a center on the axis of the supporting shaft and a radius of R.

5. A heliostat device as described in claim 1, wherein a photovoltaic cell for supplying electrical energy for the heliostat device, coplanar with the mirror assembly, is disposed below the protruding alignment sensor such that each heliostat device can operate independently without any exterior power supply or exterior control.
